# FASCICULE DE BREVET EUROPEEN

(11) **EP 0 340 128 B1**
(45) Date de publication et mention de la délivrance du brevet: **03.03.1993**
(21) Numéro de dépôt: 89420152.4
(22) Date de dépôt: 26.04.1989
(51) Int. Cl.: B23P 11/00, B21K 25/00, F16H 53/02, F01L 1/04

(54) **Procédé d'assemblage d'un arbre à cames rapportées et arbre à cames ainsi obtenu**
Nockenwellenzusammenbauverfahren und so hergestellte Nockenwelle
Camshaft assembling method and camshaft obtained

(30) Priorité: 28.04.1988 FR 8806072
(43) Date de publication de la demande: 02.11.1989
(73) Titulaire: VALTUBES, F-92100 Boulogne-Billancourt (FR)
(72) Inventeur: Lespour, Jean-Paul, F-71240 Senecey Legrand (FR)
(74) Mandataire: Desolneux, Jean-Paul Charles

(56) Documents cités:
- DE-A- 3 411 693
- DE-A- 3 521 206
- FR-A- 889 318
- GB-A- 2 034 439
- GB-A- 2 167 524
- US-A- 4 597 365
- PATENT ABSTRACTS OF JAPAN, vol. 8, no. 270 (M-344)[1707], 11 décembre 1984, page 39 M 344; & JP-A-59 141 341 (HITACHI) 14-08-1984

## Description

Le procédé d'assemblage et le dispositif obtenu par ce procédé qui font l'objet de l'invention concernent les arbres à cames rapportées et plus particulièrement ceux utilisés sur les moteurs à combustion interne. Ces arbres à cames sont utilisés pour commander l'ouverture et la fermeture des soupapes. Ils peuvent également comporter, en plus des cames, des paliers, des pignons dentés ou des poulies, rapportés ou non rapportés sur l'arbre.

Les arbres à cames ont été pendant longtemps réalisés de façon monobloc par forgeage ou matriçage à chaud ou par moulage, les pièces brutes obtenues étant ensuite usinées et rectifiées.

Plus récemment, on a cherché à réaliser des arbres à cames rapportées afin d'accroître la souplesse de fabrication en permettant de réaliser, en moins grande série, des types variés d'arbre à cames qui diffèrent les uns des autres principalement par leurs profils de cames.

L'utilisation de cames rapportées sur l'arbre permet par ailleurs d'utiliser pour ces cames des métaux ou alliages différents de ceux qui constituent l'arbre et aussi d'effectuer sur ces cames des traitements thermiques, combinés ou non avec des traitements de tous types tels que ceux qui permettent d'accroître leur résistance à l'usure.

La demande de brevet DE-A 2336241 qui représente l'état de la technique le plus proche, décrit ainsi un arbre de commande ou arbre à cames constitué d'une tige pleine ou creuse, de révolution ou non, sur laquelle sont montés des éléments de commande tels que cames, excentriques, pignons dentés qu'on solidarise avec la tige. Cette solidarisation peut être effectuée par frettage, brasage, soudage, collage. De préférence les cames sont des pièces frittées ou frittées forgées. L'arbre décrit dans l'exemple (voir figure 3 de ce document) est de section hexagonale et les éléments de commande tels que cames ou paliers qui sont montés sur cet arbre, comportent un trou de section hexagonale qui permet de les faire coulisser pour les amener à l'emplacement voulu.

Le brevet DE-C- 3227693 décrit un arbre à cames de révolution pour moteur à combustion qui comprend un tube sur lequel on met en place des cames et éventuellement des paliers. On remplit l'espace intérieur de l'arbre d'une matière plastique qu'on met en pression hydrostatique, après avoir effectué un calage angulaire des cames (voir figures 2a et 2b de ce document), de façon à déformer plastiquement l'arbre en expansion et bloquer ainsi les cames et les paliers. La liaison entre cames et arbre peut être renforcée par collage.

Enfin le document DE-A- 3301749 décrit un arbre à cames dont les cames usinées et rectifiées séparemment comportent des trous de diamètre correspondant au diamètre extérieur de l'arbre, mais légèrement inférieur.

Pour la mise en place de ces cames sur l'arbre, on les chauffe à la température voulue pour pouvoir les glisser autour de celui-ci jusqu'à l'emplacement voulu. Le frettage qui résulte du refroidissement des cames jusqu'à température ambiante assure leur solidarisation avec cet arbre. Des paliers peuvent aussi être solidarisés avec cet arbre de la même façon.

L'expérience a montré que les différentes méthodes proposées pour réaliser l'assemblage de cames avec un arbre ont chacune des inconvénients qui rendent leur mise en oeuvre difficile et les résultats obtenus pas très satisfaisants.

On remarque, tout d'abord, que le positionnement correct de chaque came sur un arbre nécessite à la fois un calage axial précis à un emplacement déterminé le long de l'axe et un calage angulaire, précis également, autour de l'arbre. D'autres pièces qui peuvent être également montées sur l'arbre, telles que des paliers, excentriques, pignons dentés ou poulies peuvent avoir besoin ou non d'un calage angulaire initial déterminé. Ces autres pièces doivent cependant être calées avec précision le long de l'axe et être bloquées en rotation par rapport à l'arbre.

Un premier inconvénient très important, commun aux différentes méthodes proposées pour la solidarisation de cames, paliers, pignons dentés, poulies ou autres pièces avec un arbre engagé à l'intérieur de leurs trous, résulte du jeu qu'il faut prévoir entre la paroi extérieure de l'arbre et la paroi du trou à l'intérieur duquel on se propose d'engager cet arbre.

Pour pouvoir déplacer la came ou toute autre pièce le long de l'arbre, de façon aisée, il doit y avoir un jeu suffisant entre la paroi de cet arbre et celle du trou de la pièce, que cet arbre ait une section transversale circulaire ou non. Un jeu trop faible peut rendre très difficile la mise en place d'une came ou autre pièce a l'emplacement voulu avec le calage angulaire nécessaire dans le cas d'une came. C'est le cas de la solidarisation par frettage d'une pièce préchauffée qu'on ne peut pratiquemment pas recommencer. A l'opposé, un jeu trop important peut rendre la méthode de solidarisation choisie inefficace. C'est le cas par exemple du collage ou du frettage. De plus, dans le cas du brasage ou du soudage, on constate souvent qu'un jeu, même relativement faible, cause un léger défaut de centrage de la pièce sur l'arbre qui peut être une cause de rebut.

Chacune des méthodes connues de solidarisation de cames ou autres pièces avec des arbres présente ses difficultés propres et conduit souvent à des résultats peu satisfaisants.

Ainsi la mise en oeuvre d'arbres ayant une section transversale de révolution facilite la réalisation des cames mais impose un calage angulaire précis de celles-ci au moment de leur solidarisation avec l'arbre. Le brasage ou le soudage de ces cames sur l'arbre peut entraîner une déformation de ces cames et/ou créer des contraintes qui causeront une fissuration ultérieure. Le collage qui ne présente pas ces inconvénients est par contre sensible au vieillissement à la température de fonctionnement des moteurs et ne garantit donc pas une durée d'utilisation sans risques. Le collage nécessite de plus un très faible jeu entre la paroi du trou de la came ou autre pièce et la paroi correspondante de l'arbre.

Si l'utilisation d'arbres à section transversale polygonale résoud le problème du calage angulaire des cames, elle nécessite un usinage particulier de ces arbres et des cames ou autres pièces correspondantes et il est toujours nécessaire d'effectuer de plus un calage axial de chaque pièce.

On a cherché la possibilité de mettre au point une méthode de réalisation d'arbres à cames rapportées qui ne présente pas les inconvénients des méthodes connues. On a cherché, en premier lieu, à mettre au point une méthode dans laquelle on puisse tolérer un jeu suffisant entre la paroi du trou de la came ou autre pièce et la paroi de l'arbre pour rendre facile et rapide l'engagement de l'arbre à l'intérieur de ce trou et la translation de cette came ou autre pièce jusqu'à son emplacement. Pour atteindre ce résultat on a recherché un moyen de calage axial qui permette d'éviter tout déplacement axial ultérieur et qui permette aussi de mettre en coïncidence l'axe du trou de chaque came ou autre pièce ainsi calée avec l'axe de l'arbre qui la porte. Un tel moyen devrait donc permettre de répartir régulièrement autour de l'arbre le jeu existant initialement. On a recherché en même temps la possibilité de monter des cames sur des arbres de section transversale circulaire, en respectant un calage angulaire précis des différentes cames, la conservation de ce calage ne dépendant pas uniquement d'un moyen de solidarisation de chaque came avec l'arbre, moyen tel qu'une colle une brasure ou une soudure. On a cherché aussi à pouvoir monter des cames prêtes à l'emploi, telles que par exemple des cames réalisées par métallurgie des poudres, avec une précision telle que plus aucune opération d'usinage ou de rectification ne soit nécessaire.

Le procédé et le dispositif qui font l'objet de l'invention permettent d'atteindre ces résultats.

Le procédé consiste à mettre en oeuvre un arbre ayant une section transversale de forme déterminée et des cames, ainsi que éventuellement d'autres pièces, telles que des paliers, pignons dentés, poulies ou autres, comportant chacune un trou dont la paroi a une forme qui correspond à celle de la section transversale de l'arbre, un jeu suffisant permettant l'introduction facile de cet arbre dans le trou de chaque pièce et le déplacement aisé et rapide de chacune de celles-ci le long de l'arbre jusqu'à l'emplacement qui lui est réservé.

On effectue ensuite, si cela n'a pas été fait lors de l'introduction de l'arbre dans le trou correspondant, un calage angulaire provisoire précis de chaque came et éventuellement de chaque autre pièce nécessitant un tel calage. On déforme ensuite plastiquement le métal de l'arbre dans une zone annulaire adjacente à au moins une des deux extrémités du trou de chaque came ou autre pièce engagée autour de l'arbre, afin de coincer cette came ou autre pièce par refoulement du métal de cet arbre avec formation d'un bourrelet comblant au moins partiellement le jeu entre arbre et paroi du trou. Lorsqu' on refoule le métal de l'arbre à partir d'une zone annulaire située au voisinage de l'une seulement des deux extrémités du trou d'une came ou autre pièce, cette came ou autre pièce doit être calée par un moyen de butée qui empêche son déplacement axial du côté où le jeu entre l'arbre et la paroi du trou n'est pas comblé.

De préférence, la déformation plastique du métal de l'arbre est effectuée au moyen d'au moins une molette qu'on fait rouler autour de l'arbre dans la zone annulaire adjacente à l'une au moins des deux extrémités du trou de chaque came ou autre pièce, en exerçant sur la surface de l'arbre une pression suffisante pour déformer plastiquement le métal. On met en oeuvre une molette dont le bord de formage a un profil tel qu'une partie du métal de l'arbre est refoulée en direction de l'entrée du trou avec formation d'un bourrelet dont une partie au moins comble au moins partiellement l'espace annulaire dans la zone d'extrémité du trou.

De préférence, on coince une came ou autre pièce en faisant rouler simultanément, sur chacune des deux zones annulaires de l'arbre adjacentes aux deux extrémités du trou, au moins une molette. On évite ainsi tout risque de déplacement axial de la came ou autre pièce le long de l'arbre pendant l'opération.

De façon particulièrement avantageuse, on effectue la déformation plastique du métal de l'arbre, dans au moins une zone annulaire adjacente à une extrémité du trou d'une came ou autre pièce, en faisant rouler simultanément sur la surface de l'arbre deux molettes montées symétriquement par rapport à l'axe de celui-ci.

Le coincement des cames ou autres pièces ainsi réalisé est d'une très grande efficacité en ce qui concerne leur calage axial. L'efficacité du calage angulaire obtenu en même temps est moins grande. Un moyen complémentaire peut si besoin avantageusement renforcer ce calage angulaire pour lui garantir une durée suffisante.

On peut pour cela mettre en oeuvre un arbre de section transversale non circulaire, telle que polygonale, le trou, ménagé dans chaque came ou autre pièce, à l'intérieur duquel on engage cet arbre, ayant une forme de paroi correspondante avec le jeu voulu. On peut alors effectuer le calage axial de la came ou autre pièce au moyen de molettes dont les porte-molette permettront un débattement radial suffisant par rapport à l'axe de l'arbre, pour qu'elles puissent déformer plastiquement dans de bonnes conditions le contour non circulaire de cet arbre.

De préférence cependant on met en oeuvre des arbres dont la section transversale a une forme de révolution. On peut alors envisager de renforcer le calage angulaire de chaque came ou autre pièce par tout moyen connu tel que collage, soudage, brasage ou autre.

De préférence on assure, également suivant l'invention, de façon particulièrement efficace, le calage angulaire de chaque came ou autre pièce dont la paroi du trou correspond, avec un jeu suffisant, à la forme générale de révolution de la paroi d'un arbre engagé à l'intérieur, en formant au moins un creux ou un relief au moins au voisinage immédiat d'au moins une extrémité de ce trou. On constate alors que, lors de la déformation plastique du métal de l'arbre, le métal refoulé en direction de l'entrée du trou coopère avec ce ou ces creux ou reliefs en renforçant le coincement de chaque came ou autre pièce.

Le calage angulaire ainsi réalisé permet d'assurer une résistance suffisante de chaque came ou autre pièce aux couples exercés sur celle-ci, en cours d'utilisation, par rapport à l'arbre sur lequel elle est montée.

De préférence, plusieurs creux et/ou reliefs sont répartis sur le pourtour de la paroi de révolution du trou de chaque came ou autre pièce dont on veut renforcer le calage angulaire, au voisinage d'au moins une extrémité de ce trou. Ces creux et/ou reliefs peuvent également être formés sur la paroi interne du trou, d'une extrémité à l'autre de celui-ci, à la façon de rainures ou de nervures ou encore d'une alternance de rainures et de nervures.

De façon particulièrement avantageuse, on réalise, sur au moins l'une des deux surfaces de révolution correspondantes de l'arbre et de la paroi du trou de chaque came ou autre pièce, avant engagement de l'arbre dans le trou, plusieurs nervures aptes à s'engager dans des rainures qu'on réalise sur l'autre surface de révolution. Ces nervures et ces rainures peuvent être inclinées d'un angle déterminé par rapport aux génératrices des parois du trou et de l'arbre ou bien, de préférence, être parallèles à ces génératrices. La répartition de ces nervures et de ces rainures est déterminée de façon à permettre d'engager l'arbre dans le trou de chaque came ou autre pièce avec possibilité de choix, pour chaque came ou autre pièce, d'une position angulaire déterminée parmi plusieurs. L'engagement de nervures dans des rainures assure le maintien du calage angulaire, au moins après calage axial, dans le cas des nervures et rainures inclinées et, en tous points le long de l'arbre, dans le cas des nervures et rainures, parallèles aux génératrices.

Le nombre de nervures et de rainures qu'on réalise peut varier suivant le mode de réalisation de l'invention. On peut en particulier réaliser, sur l'une des surfaces de révolution se correspondant, à savoir parois de l'arbre et de l'alésage de chaque came ou autre pièce, un petit nombre de nervures et sur l'autre surface de révolution, un plus grand nombre de rainures réparties de façon à pouvoir choisir entre plusieurs calages angulaires pour chaque came.

On peut aussi former, sur chacune des surfaces de révolution se correspondant, un nombre égal de nervures et de rainures réparties autour de l'axe. On peut enfin former sur chacune des surfaces de révolution, une alternance de nervures et de rainures réparties autour de l'axe, de façon à obtenir une sorte de denture intérieure, sur la paroi du trou de chaque came ou autres pièces, correspondant à des sortes de cannelures formées sur l'arbre.

On réalise le calage axial de chaque came ou autre pièce comportant un trou dont la paroi comporte des nervures et/ou rainures dont au moins une coopère avec les rainures et/ou nervures de la paroi d'un arbre engagé dans ce trou, de la façon décrite plus haut dans le cas d'un arbre dont la paroi de révolution ne comporte pas de telles nervures et/ou rainures. Le refoulement partiel du métal de l'arbre, dans au moins une zone annulaire adjacente à l'une au moins des extrémités du trou de chaque came ou autre pièce, permet, le calage angulaire étant déjà obtenu par la coopération de ces nervures et rainures, de supprimer les jeux existants, grâce au coincement réalisé sur tout le pourtour. On assure ainsi un centrage rigoureux de chaque came ou autre pièce par rapport à l'axe de l'arbre et on supprime le jeu angulaire.

On réalise les nervures ou les rainures le long de l'arbre par toute méthode connue telle que usinage, étirage ou autre. On peut en particulier former sur l'arbre une alternance de nervures et de rainures parallèles aux génératrices au moyen d'au moins deux molettes qui roulent simultanément sur la surface de révolution de l'arbre qui est placé entre les deux, l'axe de chacune de ces molettes étant incliné d'un angle A par rapport à l'axe de l'arbre, de façon à effectuer un parcours hélicoïdal sur la surface de cet arbre, les nervures et rainures formant la denture de chaque molette étant elles-mêmes inclinées d'un angle égal à A orienté de façon telle qu'elles forment sur l'arbre des nervures et rainures parallèles aux génératrices. On ajuste le pas de la denture de chaque molette et on conjugue le mouvement de rotation des molettes et de l'arbre, de façon que les nervures et les rainures obtenues s'étendent de façon continue sur la longueur de l'arbre, parallèlement aux génératrices, formant ainsi un ensemble de cannelures régulièrement réparties autour de l'axe de cet arbre.

De façon avantageuse, on met en oeuvre un arbre creux ce qui permet de faire circuler un fluide à l'intérieur, tel que par exemple de l'huile et d'assurer ainsi la lubrification en des points déterminés grâce à des perçages qu'on réalise à travers la paroi de l'arbre. On peut aussi solidariser si nécessaire avec l'arbre comme cela a été dit plus haut des pièces telles que des paliers, des poulies ou des pignons dentés de la même façon que les cames.

Le procédé suivant l'invention permet en particulier de solidariser avec l'arbre des cames ou autres pièces, réalisées en un métal ou matériau différent du métal constituant l'arbre. Il permet plus spécialement de monter des cames ayant subi un traitement anti-usure tel qu'une cémentation, nitruration, carbonitruration ou autre. Il permet enfin le montage de cames, le plus souvent à l'état prêt à l'emploi, réalisées par métallurgie des poudres qui se prêtent mal à des méthodes de solidarisation par soudage, brasage ou frettage.

L'invention concerne aussi un arbre à came(s) rapportée(s) constitué par un arbre engagé dans le trou correspondant d'au moins une came. La section transversale de cet arbre a un contour extérieur dont la forme correspond à celle de la paroi du trou d'au moins une came ou autre pièce a l'intérieur de laquelle l'arbre est engagé. Le jeu initial entre les parois du trou et de l'arbre est suffisant pour permettre un engagement facile de cet arbre dans ce trou et un déplacement également facile de la came ou autre pièce jusqu'à l'emplacement prévu.

Cet arbre à came(s) rapportée(s) comporte, dans une zone adjacente à au moins l'une des extrémités du trou d'au moins une came, un bourrelet formé par déformation plastique du métal de l'arbre. Une partie de ce bourrelet comble, au moins partiellement, l'espace annulaire existant dans la zone d'extrémité du trou entre la paroi de celui-ci et la paroi correspondante de l'arbre. De préférence, un bourrelet est formé à chacune des deux extrémités du trou d'au moins une came ou autre pièce. Dans le cas où il y a un seul bourrelet à l'une seulement des deux extrémités du trou d'au moins une came ou autre pièce, celle-ci est en appui contre un moyen de butée disposé au voisinage de l'autre extrémité de l'alésage.

Outre au moins une came, l'arbre à came(s) rapportée(s) peut comporter au moins une autre pièce rapportée telle qu'un palier, un pignon denté, une poulie ou autre dont la paroi du trou présente un jeu par rapport à l'arbre, comblé au moins partiellement dans au moins une zone d'extrémité par une partie d'un bourrelet. De préférence, l'arbre à came(s) rapportée(s) a une forme générale de révolution. De préférence également, la paroi de révolution du trou d'au moins une came ou autre pièce comprend au moins un creux ou relief formé au voisinage immédiat d'au moins une extrémité de ce trou qui coopère avec le bourrelet adjacent. De façon avantageuse, au moins un creux est en forme d'encoche réalisée dans le bord d'extrémité de la paroi du trou. L'une au moins, des deux parois de révolution du trou et de l'arbre, peut comporter plusieurs reliefs, sous forme de nervures, engagés dans des creux, sous forme de rainures, de l'autre paroi. Avantageusement, les parois en regard de l'arbre et du trou comportent chacune une alternance de nervures et de rainures, en forme de cannelures parallèles aux génératrices qui coopèrent par engagement réciproque.

Les cames peuvent être en un matériau de composition différente de celle de l'arbre ou en un métal traité de façon différente. Avantageusement, elles sont en un métal fritté ou forgé et fritté. D'autres pièces telles que paliers, pignons dentés, poulies ou autres peuvent aussi être en métal fritté ou forgé et fritté. L'arbre est avantageusement creux et peut comporter un ou plusieurs perçages à travers sa paroi permettant le passage d'un fluide tel qu'un lubrifiant. La section de l'arbre n'est pas nécessairement constante d'un bout à l'autre et dans le cas d'un arbre creux son épaisseur n'est pas nécessairement constante d'un bout à l'autre.

L'exemple et les figures ci-après décrivent, de façon non limitative, des modes particuliers de réalisation du procédé et du dispositif suivant l'invention.

La figure 1 est une vue, en coupe, d'un tronçon d'arbre de révolution engagé dans le trou correspondant d'une came.

La figure 2 est une vue, en coupe, d'un premier mode de réalisation de l'arbre à came(s) rapportée(s) suivant l'invention.

La figure 3 représente un moyen de calage angulaire d'une came qui peut être solidarisée avec un arbre suivant le premier mode de réalisation de l'invention montré figure 2.

La figure 3A est une vue en coupe suivant le plan A-A de la figure 3.

La figure 4 est une vue d'un deuxième mode de réalisation, d'un arbre à came(s) rapportée(s) suivant l'invention comportant un ensemble de nervures et de rainures.

La figure 5 est une vue d'une came avant montage sur l'arbre de la figure 4.

La figure 6 est une vue en coupe d'un tronçon de l'arbre de la figure 4 engagé dans le trou de la came de la figure 5.

La figure 7 est une vue de détail de la réalisation de l'arbre à cames rapportées de la figure 4.

La figure 8 est une vue d'un mode particulier de réalisation d'un ensemble de nervures et rainures sur un arbre avant mise en place et solidarisation de cames rapportées par le procédé suivant l'invention.

La figure 9 une vue du bord de formage d'une molette de la figure 8.

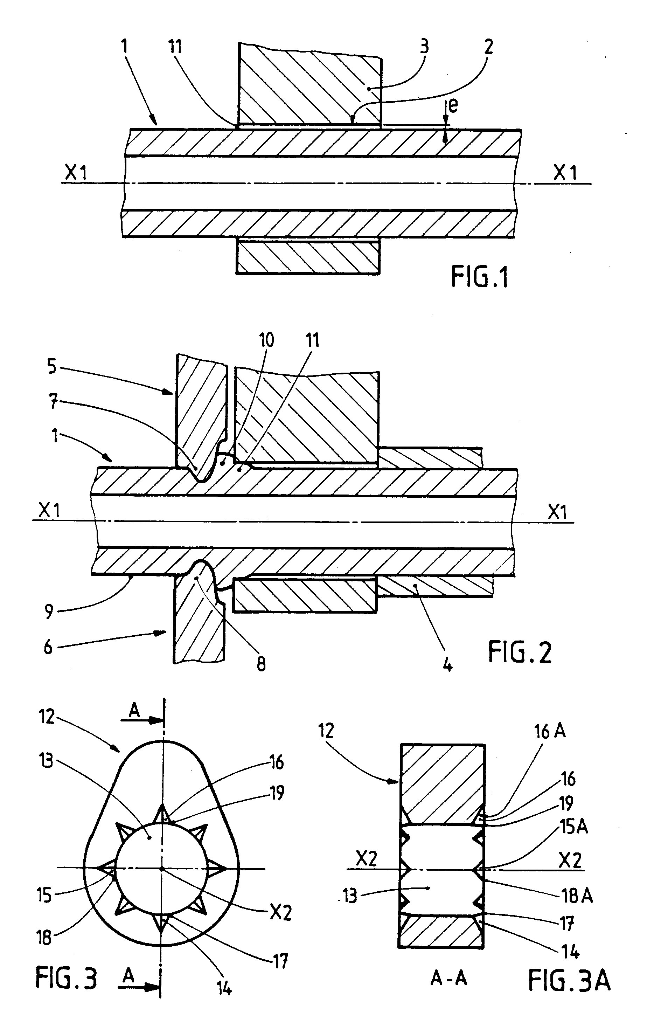

La figure 1 représente en coupe un tronçon d'un arbre creux de révolution 1 engagé dans le trou 2, à paroi également de révolution, d'une came 3 dont seule la partie qui comprend le trou 2 est représentée. Le plan de coupe de la figure comprend l'axe X1 - X1 de l'arbre. Le jeu radial "e" entre la paroi du trou et l'arbre est déterminé de façon à permettre l'introduction aisée de l'arbre dans le trou et le glissement facile de la came jusqu'à son emplacement d'utilisation.

La figure 2 représente, également en coupe, le tronçon d'arbre 1 et la came 3 de la figure 1 après mise en oeuvre d'un premier mode d'exécution du procédé suivant l'invention. Dans le cas de cette figure 2, le calage axial de la came 3 est assuré d'un côté par sa mise en appui contre une butée annulaire 4 qui est elle-même en appui à son autre extrémité, non représentée, contre une pièce de retenue solidaire de l'arbre 1. On assure aussi, le plus souvent, un calage angulaire provisoire par un moyen amovible non représenté. Deux molettes de révolution 5, 6 dont seulement une partie des bords de formage 7, 8 est représentée, sont montées sur des axes parallèles à X1 - X1 situés dans le plan de la figure 2 et non représentés. Ces molettes sont entraînées en rotation par des moyens non représentés, de façon à rouler sur la paroi 9 de l'arbre 1, dans une zone annulaire adjacente à l'extrémité 11 du trou 2 de la came 3, en exerçant une pression suffisante pour déformer plastiquement le métal de l'arbre. Sous l'action de ces deux molettes il se forme un bourrelet annulaire 10 qui s'engage en partie dans l'extrémité 11 de la paroi du trou 2. Le jeu annulaire "e" est ainsi partiellement comblé et, grâce à l'action symétrique des deux molettes par rapport à l'axe X1 - X1, l'axe de la paroi de révolution du trou 2 est mis en coïncidence avec l'axe X1 - X1 de l'arbre 1.

On obtient ainsi un calage axial de la came 3 particulièrement efficace grâce à l'effet de coincement produit par l'engagement partiel du bourrelet 10 dans le trou 2. Cet engagement partiel est favorisé par le profil particulier des bords de révolution lisses des molettes 7 et 8. Ce profil particulier est tel que le déplacement du métal de l'arbre par ces bords a lieu, de façon privilégiée, en direction de l'extrémité 11 du trou 2. Le coincement ainsi obtenu a aussi une action limitée de calage angulaire de la came 3 par rapport à l'arbre 1, après démontage du moyen de calage provisoire, mais cette action est le plus souvent insuffisante lorsque les parois de l'arbre et du trou sont de révolution.

Il est donc en général avantageux d'assurer par un moyen permanent complémentaire le calage angulaire pour s'opposer aux forces qui tendent à faire tourner la came 3 autour de l'arbre 1.

On voit aux figures 3 et 3A une came 12 qui comporte un trou 13 à paroi de révolution permettant son montage sur un arbre également de révolution par le procédé suivant l'invention. La figure 3 est une vue de côté du trou 13 dont l'axe X2 - X2 est perpendiculaire au plan de la figure. La figure 3A est une vue suivant le plan de coupe A - A de la figure 3. Afin de permettre un calage angulaire plus efficace lors du coincement de la came par formation d'au moins un bourrelet, on réalise au préalable, sur au moins un bord d'extrémité du trou, un ensemble de creux tels que 14, 15, 15A, 16 et de reliefs tels que 17, 18, 18A, 19 répartis à l'extrémité de la paroi du trou. Pratiquement ces creux et ces reliefs sont obtenus par réalisation d'encoches dont les parois forment dièdre et dont l'arête, telle que 16A, est inclinée d'environ 60° par rapport à l'axe X2 - X2 dans le cas des figures 3 et 3A. Les reliefs tels que 18A correspondent simplement à l'intersection des parois formant dièdre avec la paroi de révolution et aussi avec la face latérale de la came 12. On comprend qu'au moment du formage de bourrelets, tels que par exemple le bourrelet 10 de la figure 2, à partir d'un arbre engagé dans le trou 13 de la came 12, la partie du bourrelet qui pénètre dans l'extrémité du trou 13, coopère avec les encoches et les reliefs décrits ci-dessus pour assurer un calage angulaire renforcé de la came 12.

On remarque que, dans le cas des figures 1 à 3 et 3A, on doit, comme cela a été indiqué plus haut, maintenir chaque came dans la position angulaire voulue par rapport à l'arbre qui est engagé à l'intérieur, par un moyen de calage angulaire provisoire, pendant le formage du bourrelet.

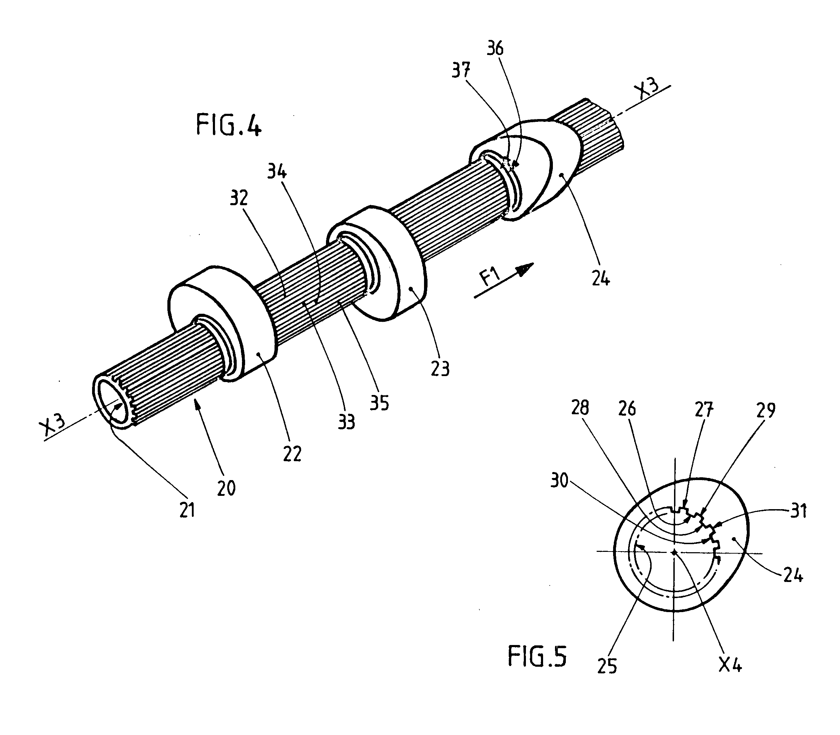

Suivant un autre mode de réalisation du procédé suivant l'invention, montré aux figures 4 à 7, on assure le calage angulaire de chaque came ou autre pièce par rapport à un arbre de révolution au moyen de reliefs et de creux sous forme de nervures et de rainures qui s' interpénètrent.

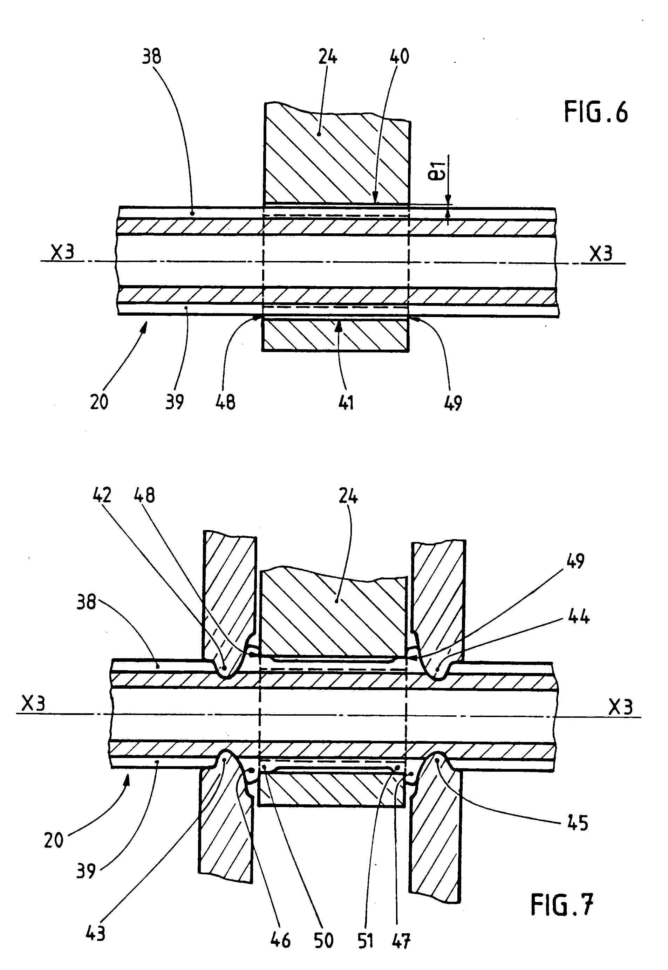

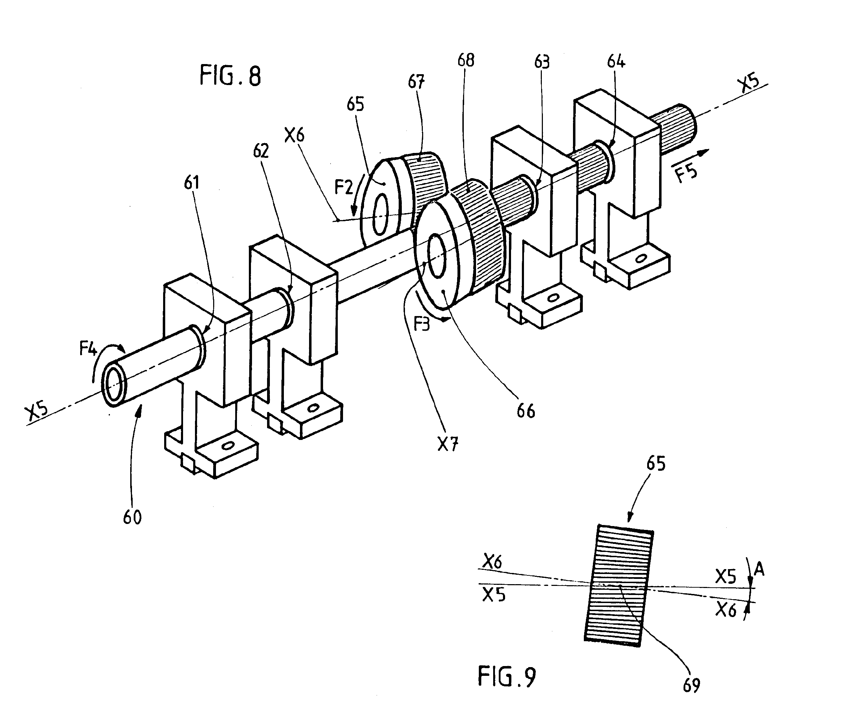

La figure 4 est une vue en perspective d'un arbre 20 en acier, d'axe X3 - X3, suivant l'invention, ayant une forme générale de révolution et percé d'un trou axial 21, sur lequel sont montées 3 cames rapportées 22, 23 et 24. Ces cames sont en métal fritté, et calibrées par matriçage à froid de façon connue. La figure 5 montre la face latérale de la came 24 vue suivant la flêche F 1 avant montage sur l'arbre 20. Cette came comporte un trou à paroi de révolution 25, paroi sur laquelle a été formée une alternance de nervures telles que 26, 28, 30 et de rainures telles que 27, 29, 31, réparties également autour de l'axe X4 de la came. L'arbre 20 comporte une alternance correspondante de rainures telles que 32, 34 et de nervures telles que 33, 35 dont les dimensions sont telles qu'il est possible d'engager la came 24 sur l'arbre 20, à partir d'une extrémité de celui-ci les nervures de la paroi du trou 25 pénétrant dans les rainures de l'arbre 20 et les nervures de cet arbre pénétrant dans les rainures de la paroi du trou 25. On voit que cette alternance de rainures 32, 34 et de nervures 33, 35, parallèles aux génératrices, forme sur la surface de révolution de l'arbre un ensemble de cannelures. On peut choisir pour les cames, telles que 24, une position angulaire quelconque pour laquelle les nervures de la paroi du trou telles que 26, 28, 30 se trouveront en correspondance avec des rainures de l'arbre 20. S'il y a "n" nervures formées sur la paroi du trou et "n" rainures correspondantes formées sur l'arbre 20, on peut choisir, pour la came 24, une position angulaire parmi "n" positions possibles. Pour n'importe laquelle de ces positions un calage angulaire efficace de la came est assuré par l'interpénétration des nervures et des rainures. Comme le montre la figure 4 le coincement de chaque came est réalisé par des bourrelets annulaires, tels que 36, réalisés par déformation plastique du métal de l'arbre dans des zones annulaires adjacentes à chacune des extrémités du trou de chaque came avec formation de gorges, telles que 37. Les figures 6 et 7 montrent, en coupe de façon schématique, un mode de réalisation du coincement de chaque came, telle que 24. On voit figure 6, avant l'exécution de l'opération de coincement, l'arbre 20 en coupe suivant son axe X3 - X3. La ligne de coupe passe par deux nervures 38, 39 de l'arbre engagées dans deux rainures de la paroi du trou de la came 24 dont le fond est visible en 40 et 41. L'intervalle "el" entre le fond de rainure 40 et le sommet de la nervure 38 correspond au jeu radial qui permet de glisser la came 24 sur l'arbre 20 jusqu'à son emplacement. Afin de centrer correctement la came 24 par rapport à l'axe X3 - X3 de l'arbre 20, on fait, de façon avantageuse, rouler simultanément 4 molettes disposées symétriquement par rapport à l'axe X3 - X3. La figure 7 montre 4 molettes dont seulement une partie des bords de formage 42, 43, 44, 45 est représentée en coupe. Ces bords de formage déforment plastiquement le métal de l'arbre dans la zone périphérique qui comporte les nervures telles que 38 et 39 en forme de cannelures. Sous l'action de ces molettes il se forme des bourrelets annulaires 36, 47 aux deux extrémités 48, 49 du trou de la came 24 qui comblent partiellement le jeu annulaire entre le sommet des nervures 38, 39 et les fonds de rainures 40, 41, comme on le voit en 50 et 51 au voisinage des deux extrémités du trou. Ce comblement du jeu radial "el" entre la paroi du trou de la came 24 et l'arbre 20 étant effectué de façon parfaitement symétrique par les bords de formage des 4 molettes permet un coincement axial de la came tel que l'axe X4 - X4 de celle-ci est mis en coïncidence avec l'axe X3 - X3 de l'arbre. De plus les bourrelets 46, 47 assurant le calage axial de la came empêchent tout déplacement de celle-ci le long de l'arbre parallèlement à son axe. La déformation plastique du métal de l'arbre étant limitée à une zone annulaire de faible largeur et de faible profondeur il est possible d'utiliser un arbre creux sans déformation générale de celui-ci. L'épaisseur de paroi doit être déterminée en fonction de la profondeur de pénétration des bords de formage des molettes. Un tel arbre creux permet la réalisation de perçages radiaux pour assurer la circulation d'un fluide.

Les figures 8 et 9 représentent un mode particulier de réalisation d'une alternance de nervures et rainures formant cannelures sur un arbre 60.

L'arbre creux 60 est monté sur des paliers 61, 62, 63, 64. Deux molettes 65, 66 diamétralement opposées par rapport à l'axe X5 - X5 roulent, entraînées par des moyens moteurs non représentés sur la surface de l'arbre. Elles comportent chacune sur leur périphérie une alternance de nervures et de rainures 67, 68 et, grâce à la pression qu'elles exercent sur l'arbre elles forment sur celui-ci une alternance de rainures et nervures correspondantes. Les axes X6 et X7 de ces molettes sont inclinés d'un angle A par rapport à l'axe X5 - X5 de l'arbre de façon que les molettes roulent sur la surface de l'arbre en effectuant un parcours hélicoïdal. Ceci apparaît sur le schéma de la fig. 9 qui montre la paroi de révolution de la molette 65 dont l'axe X6 - X6 fait avec l'axe X5 - X5 de l'arbre 60 l'angle A.

L'arbre 60, entraîné par les molettes qui tournent dans le sens des flèches F2, F3, tourne lui-même suivant F4 et avance simultanément le long de l'axe X5 - X5 dans le sens de la flèche F5. Comme on le voit Fig 9 dans le cas de la molette 65 les nervures et rainures 67, 68 de ces molettes sont elles-mêmes inclinées de l'angle A par rapport aux génératrices de la surface périphérique des molettes de façon à être sensiblement parallèles à l'axe X5 - X5 dans la zone 69 de contact avec l'arbre pour former sur cet arbre des rainures et nervures parallèles aux génératrices de la surface de révolution de celui-ci.

Les diamètres de l'arbre et des molettes ainsi que le nombre de nervures et rainures que comportent celles-ci sont déterminés de façon que à chaque tour de l'arbre il y ait correspondance entre les nervures et rainures des molettes et les rainures et nervures correspondantes de l'arbre. Cette méthode de formage permet ainsi de réaliser une alternance de rainures et nervures parallèles aux génératrices de la surface de révolution de l'arbre 60 sur toute la longueur de celui-ci.

Cette méthode de formage peut être utilisée aussi pour former sur l'arbre des nervures et rainures hélicoïdales suivant un mode particulier de réalisation de l'invention. Bien que cette méthode de formage donne des résultats particulièrement satisfaisants de nombreuses autres méthodes peuvent être utilisées pour former des nervures ou des rainures ou une alternance de nervures et de rainures sur l'arbre utilisé pour la mise en oeuvre du procédé et la réalisation du dispositif suivant l'invention.

On peut en particulier utiliser des méthodes d'extrusion à travers des filières de profil convenable ou d'étirage également à travers des filières munies de nervures, rainures ou alternance de nervures et rainures. On peut aussi réaliser ces nervures et/ou rainures par usinage de façon connue.

De nombreuses méthodes connues de l'homme de métier conviennent également pour réaliser les trous des cames dont les parois ont des nervures et/ou rainures correspondant aux rainures et/ou nervures des arbres.

Dans le cas des cames réalisées en métaux ou alliages frittés ou frittés et forgés, l'homme de métier sait réaliser, soit lors du pressage initial soit par matriçage, des trous dont les parois ont des nervures ou rainures, ou une alternance de nervures et rainures avec la précision voulue sans aucune rectification ultérieure. De telles cames, grâce à leur ensemble de caractéristiques particulièrement adaptées à l'usage qui en est fait conviennent particulièrement bien à la mise en oeuvre du procédé et à la réalisation du dispositif suivant l'invention.

L'arbre à cames rapportées suivant l'invention peut le cas échéant comporter différentes pièces, telles que un ou plusieurs paliers, une ou plusieurs poulies, un ou plusieurs pignons dentés qui sont montées sur l'arbre de la même façon que les cames c'est-à-dire qui comportent un trou semblable et qui sont coincées à leur emplacement de la même façon.

De très nombreuses variantes de réalisation du procédé et du dispositif suivant l'invention peuvent être envisagées qui ne sortent pas du domaine de celle-ci.

## Revendications

1. Procédé de réalisation d'un arbre à came(s) rapportée(s) dans lequel on met en oeuvre un arbre (1, 20) et au moins une came (3, 12, 24) comportant un trou (2, 13) dont la section transversale correspond à celle de l'arbre, un jeu suffisant étant prévu entre les parois de l'arbre et du trou pour pouvoir engager facilement cet arbre à l'intérieur de ce trou puis déplacer aisément la came jusqu'à l'emplacement prévu et dans lequel, après avoir atteint cet emplacement on solidarise cette came avec l'arbre caractérisé en ce que, dans une zone annulaire adjacente à l'une au moins des deux extrémités (11, 48, 49) du trou (2, 13) de cette came (3, 12, 24) on exerce sur la surface extérieure de l'arbre (1, 20) une pression suffisante pour déformer plastiquement le métal de façon à refouler au moins une partie de celui-ci en formant un bourrelet annulaire ((10, 36, 47) dont au moins une partie vient combler, au moins partiellement, le jeu entre les parois de l'arbre et du trou à l'extrémité de celui-ci et coincer ainsi la came par rapport à l'arbre, un moyen complémentaire étant mis en oeuvre pour renforcer le calage angulaire de la came.

2. Procédé suivant revendication 1 caractérisé en ce qu'on exerce sur la surface extérieure de l'arbre (1, 20) une pression suffisante pour déformer plastiquement le métal de l'arbre en faisant rouler au moins une molette (5, 6) autour de cet arbre dans une sone annulaire adjacente à l'une au moins des deux extrémités (11, 48, 49) du trou (2, 13) de la came, cette molette comportant un bord de formage (7, 8, 42, 43, 44, 45) d'un profil tel que, grâce à la pression exercée par la molette sur le métal de l'arbre, au moins une partie de ce métal est refoulée en direction de l'extrémité (11, 48, 49) et forme ainsi le bourrelet annulaire (10, 36, 47) dont une partie comble ainsi le (jeu (e, el) entre les parois de l'arbre et du trou, au moins partiellement.

3. Procédé suivant revendication 2 caractérisé en ce qu'on fait rouler simultanément deux molettes (5, 6) autour de l'arbre (1, 20), opposées par rapport à l'axe (X1 - X1, X3 - X3) de l'arbre, de façon que leurs bords de formage (7, 8, 42, 43, 44, 45) se déplacent dans la zone annulaire adjacente à l'une (11, 48, 49) au moins des deux extrémités du trou (2, 13).

4. Procédé suivant revendication 3 caractérisé en ce qu'on fait rouler simultanément les bords de formage (42, 43, 44, 45) de deux molettes dans chacune des deux zones adjacentes aux extrémités (48, 49) du trou.

5. Procédé suivant l'une des revendications 1 à 4 caractérisé en ce qu'on renforce le calage angulaire de la came par rapport à l'arbre en mettant en oeuvre un arbre de forme non de révolution, la paroi du trou de la came ayant une forme correspondante à celle de l'arbre.

6. Procédé suivant l'une des revendications 1 à 4 caractérisé en ce que les parois du trou (2, 13) de la came (3, 12, 24) et de l'arbre (1, 20) ont une forme générale de révolution et en ce qu'on renforce le calage angulaire de la came (12) par rapport à l'arbre en formant au moins un creux (14, 15, 15A, 16) ou un relief (17, 18, 18A, 19) au voisinage immédiat d'au moins une extrémité du trou (13) afin que, lors de la déformation plastique du métal de l'arbre, le métal refoulé en direction de cette extrémité du trou coopère avec ce creux ou ce relief pour assurer un calage angulaire efficace de la came.

7. Procédé suivant revendication 6 caractérisé en ce que plusieurs creux ou reliefs sont répartis autour de l'axe (X2 - X2) du trou (13).

8. Procédé suivant revendication 6 ou 7 caractérisé en ce qu'on réalise au moins un creux ou relief sous forme de rainure ou nervure d'une extrémité à l'autre de la paroi du trou de la came.

9. Procédé suivant revendication 8 caractérisé en ce qu'on réalise sur au moins l'une des deux parois correspondantes de l'arbre (20) et du trou de la came (24) plusieurs nervures (26, 28) aptes à s'engager dans des rainures (32, 34) qu'on réalise sur l'autre surface de révolution de façon à permettre d'engager l'arbre dans le trou de la came avec un calage angulaire déterminé de celle-ci, choisi parmi plusieurs, le refoulement ultérieur du métal de l'arbre (20) avec formation d'un bourrelet (36, 47) dans une sone annulaire adjacente à au moins une extrémité (48, 49) du trou, permettant d'éliminer le jeu pouvant exister entre nervures et rainures dans cette sone annulaire (50, 51).

10. Procédé suivant revendication 9 caractérisé en ce qu'on forme les nervures (26, 28, 30) et rainures (32, 34) sur les surfaces de révolution parallèlement aux génératrices.

11. Procédé suivant revendication 9 ou 10 caractérisé en ce qu'on forme sur l'arbre (60) une alternance de rainures et de nervures en faisant rouler sur celui-ci, avec une pression suffisante, au moins une molette (67, 68) suivant un parcours hélicoïdal.

12. Procédé suivant l'une des revendications 1 à 11 caractérisé en ce qu'on solidarise avec l'arbre, non seulement au moins une came, mais aussi au moins une autre pièce telle que palier, pignon denté, poulie ou autre.

13. Arbre à came(s) rapportée(s) comportant au moins une came (3, 12, 24) à l'intérieur du trou (2, 13) de laquelle est engagé un arbre dont la paroi extérieure correspond à celle du trou avec un jeu initial (e, el) suffisant pour permettre un engagement facile de cet arbre dans ce trou et un déplacement facile de la came jusqu'à l'emplacement prévu caractérisé en ce qu'il comporte, dans au moins une sone adjacente à l'une des extrémités (11, 48, 49) du trou d'au moins une came (3, 24) un bourrelet (10, 36, 47) annulaire, en surépaisseur, réalisé par refoulement du métal de l'arbre (1, 20) grâce à une déformation plastique obtenue par une pression exercée sur sa surface extérieure dans une zone annulaire adjacente à l'extrémité (11, 48, 49) correspondant du trou (2, 13), une partie de ce bourrelet comblant au moins partiellement l'espace annulaire existant dans la zone d'entrée (11, 48, 49) du trou (2) entre la paroi de celui-ci et la paroi correspondante de l'arbre (1, 20) et en ce qu'une partie au moins du bourrelet coopère avec un moyen complémentaire qui renforce le calage angulaire de la came.

14. Arbre à came(s) suivant revendication 13 caractérisé en ce que lorsqu'un seul bourrelet (10) est formé à l'une (11) des deux extrémités seulement du trou (2) d'une came (3) cette came est en appui contre un moyen de butée (4) placé du côté de l'autre extrémité de ce trou.

15. Arbre à came(s) suivant revendications 13 ou 14 caractérisé en ce qu'il comprend, outre au moins une came, au moins une autre pièce rapportée telle qu'un palier, un pignon denté, une poulie ou autre, pourvue d'un trou dont la paroi présente un jeu par rapport à l'arbre, ce jeu étant comblé partiellement, à l'une au moins des deux extrémités du trou, par une partie d'un bourrelet formé par déformation plastique du métal de l'arbre.

16. Arbre à came(s) suivant l'une des revendications 13 à 15 caractérisé en ce que les parois en regard de l'arbre (1, 20) et du trou de la came (3, 24) ou autre pièce ont une forme générale de révolution et en ce que le trou (13) d'au moins une came (12) ou autre pièce comprend au moins un creux (14, 15, 15A, 16) et/ou relief (17, 18, 18A, 19) formé(s) au voisinage immédiat d'au moins une extrémité du trou (13) qui coopère(nt) avec au moins une partie d'au moins un bourrelet.

17. Arbre à came suivant revendication 16 caractérisé en ce que l'une au moins des deux parois de révolution en regard comporte au moins plusieurs reliefs sous forme de nervures (26, 28) qui sont engagés dans des creux sous forme de rainures (32, 34) de l'autre paroi.

18. Arbre à came(s) suivant revendication 17 caractérisé en ce que l'arbre (60) comporte une alternance de nervures et rainures formant cannelures.

19. Arbre à came(s) suivant l'une des revendications 13 à 18 caractérisé en ce qu'il comporte au moins une came ou autre pièce en métal fritté ou forgé et fritté.

20. Arbre à came(s) suivant l'une des revendications 13 à 19 caractérisé en ce que l'arbre (20, 60) est creux.

## Claims

1. A process for the production of a camshaft with one or more cams fitted thereto, wherein a shaft (1, 20) and at least one cam (3, 12, 24) comprising a hole (2, 13) whose cross-section corresponds to that of the shaft are used, a sufficient clearance being provided between the walls of the shaft and the hole to be able easily to engage said shaft within said hole and then easily displace the cam to the planned location, and wherein, after having reached said location, said cam is fixed to the shaft, characterised in that, in an annular zone adjacent to one at least of the two ends (11, 48, 49) of the hole (2, 13) in said cam (3, 12, 24), there is applied to the outside surface of the shaft (1, 20) a sufficient pressure to cause plastic deformation of the metal so as to upset at least a part thereof, forming an annular bead (10, 36, 47) of which at least a portion at least partially fills the clearance between the walls of the shaft and the hole at the end thereof and thus wedges the cam with respect to the shaft, a complementary means being usde to reinforce the angular fixing of the cam.

2. A process according to claim 1 characterised in that a sufficient pressure is applied to the outside surface of the shaft (1, 20) to cause plastic deformation of the metal of the shaft, by rolling at least one roller (5, 6) around said shaft in an annular zone adjacent to one at least of the two ends (11, 48, 49) of the hole (2, 13) of the cam, said roller comprising a shaping edge (7, 8, 42, 43, 44, 45) of a profile such that, by virtue of the pressure applied by the roller to the metal of the shaft, at least a portion of said metal is upset in the direction of the end (11, 48, 49) and thus forms the annular bead (10, 36, 47), of which a portion thus fills the clearance (e, e1) between the walls of the shaft and the hole, at least partially.

3. A process according to claim 2 characterised in that two rollers (5, 6) are simultaneously rollde around the shaft (1, 20), which are in opposite relationship with respect to the axis (X1 - X1, X3 - X3) of the shaft, in such a way that their shaping edges (7, 8, 42, 43, 44, 45) are displaced in the annular zone adjacent to one (11, 48, 49) at least of the two ends of the hole (2, 13).

4. A process according to claim 3 characterised in that the shaping edges (42, 43, 44, 45) of two rollers are simultaneously rolled in each of the two zones which are adjacent to the ends (48, 49) of the hole.

5. A process according to one of claims 1 to 4 characterised in that the angular fixing of the cam with respect to the shaft is reinforced by using a shaft of a shape which is not a shape of revolution, the wall of the hole of the cam being of a shape corresponding to that of the shaft.

6. A process according to one of claims 1 to 4 characterised in that the walls of the hole (2, 13) of the cam (3, 12, 24) and of the shaft (1, 20) are of a general shape of revolution and that the angular fixing of the cam (12) with respect to the shaft is reinforced by forming at least one recess (14, 15, 15A, 16) or a raised portion (17, 18, 18A, 19) in the immediate vicinity of at least one end of the hole (13) so that, upon plastic deformation of the metal of the shaft, the metal which is upset in the direction of said end of the hole co-operates with said recess or said raised portion to provide effective angular fixing of the cam.

7. A process according to claim 6 characterised in that a plurality of recesses or raised portions are distributed around the axis (X2 - X2) of the hole (13).

8. A process according to claim 6 or claim 7 characterised by producing at least one recess or raised portion in the form of a groove or a rib from one end of the wall of the hole of the cam to the other.

9. A process according to claim 8 characterised by producing on at least one of the two corresponding walls of the shaft (20) and of the hole of the cam (24) a plurality of ribs (26, 28) capable of engaging into grooves (32, 34) which are produced on the other surface of revolution so as to permit engagement of the shaft into the hole of the cam with a given angular fixing of the latter, which is selected from a plurality thereof, the subsequent upsetting of the metal of the shaft (20) with the formation of a bead (36, 47) in an annular zone adjacent to at least one end (48, 49) of the hole making it possible to eliminate the clearance which may exist between ribs and grooves in said annular zone (50, 51).

10. A process according to claim 9 characterised in that the ribs (26, 28, 30) and grooves (32, 34) are formed on the surfaces of revolution in parallel relationship to the generatrices.

11. A process according to claim 9 or claim 10 characterised by forming an alternate arrangement of grooves and ribs on the shaft (60) by rolling at least one roller (67, 68) against the shaft with a sufficient pressure along a helical path.

12. A process according to one of claims 1 to 11 characterised in that not only at least one cam but also at least one other component such as a bearing, gear, puller or the like is fixed to the shaft.

13. A camshaft with one or more cams fitted thereto comprising at least one cam (3, 12, 24), in the interior of the hole (2, 13) of which is engaged a shaft whose outside wall corresponds to that of the hole with an initial clearance (e, e1) sufficient to permit easy engagement of said shaft into said hole and easy displacement of the cam to the planned location, characterised in that it comprises, in at least one zone adjacent of the ends (11, 48, 49) of the hole of at least one cam (3, 24) an annular bead (10, 36, 47) of increased thickness which is produced by upsetting of the metal of the shaft (1, 20) by virtue of plastic deformation produced by a pressure applied to its outside surface in an annular zone adjacent to the corresponding end (11, 48, 49) of the hole (2, 13), a portion of said bead at least partially filling the annular space at the entry zone (11, 48, 49) of the hole (2) between the wall thereof and the corresponding wall of the shaft (1, 20), and that at least a portion of the bead co-operates with a complementary means which reinforces the angular fixing of the cam.

14. A camshaft with one or more cams according to claim 13 characterised in that, when a single bead (10) is formed at one (11) of the two ends only of the hole (2) of a cam (3), said cam bears against an abutment means (4) disposed at the other end of said hole.

15. A camshaft with one or more cams according to claim 13 or claim 14 characterised in that, besides at least one cam, it comprises at least one other fitted component such as a bearing, a gear, a pulley or the like, provided with a hole whose wall has a clearance with respect to the shaft, said clearance being partially filled at one at least of the two ends of the hole by a portion of a bead which is formed by plastic deformation of the metal of the shaft.

16. A camshaft with one or more cams according to one of claims 13 to 15 characterised in that the facing walls of the shaft (1, 20) and the hole of the cam (3, 24) or other component are of a general shape of revolution and that the hole (13) of at least one cam (12) or other component comprises at least one recess (14, 15, 15A, 16) and/or raised portion (17, 18, 18A, 19) formed in the immediate vicinity of at least one end of the hole (13) which co-operates or co-operate with at least a portion of at least one bead.

17. A camshaft according to claim 16 characterised in that one at least of the two facing walls of revolution comprise at least a plurality of raised portions in the form of ribs (26, 28) which are engaged in recesses in the form of grooves (32, 34) in the other wall.

18. A camshaft having one or more cams according to claim 17 characterised in that the shaft (60) comprises an alternate arrangement of ribs and grooves forming splines.

19. A camshaft with one or more cams according to one of claims 13 to 18 characterised in that it comprises at least one cam or other component of sinterde or forged and sintered metal.

20. A camshaft with one or more cams according to one of claims 13 to 19 characterised in that the shaft (20, 60) is hollow.

## Patentansprüche

1. Verfahren für den Zusammenbau einer Nockenwelle mit aufsteckbarem(n) Nocken, bei der eine Welle (1, 20) und mindestens 1 Nocken (3, 12, 24) mit einem Loch (2, 13), dessen Querschnitt dem der Welle entspricht, ausgeführt wird, wobei zwischen der Wellenoberfläche und der Lochoberfläche genügend Spiel vorgesehen ist, damit die Welle leicht durch das Nockenloch geht und der Nocken dann auf der Welle bis zur vorgesehenen Stelle verschiebbar ist, und bei dem dann der Nocken mit der Welle an der vorgesehenen Stelle fest verbunden wird, dadurch gekennzeichnet, daß in einem an mindestens einem der beiden Enden (11, 48, 49) des Lochs (2, 13) des Nockens (3, 12, 24) angrenzenden, ringförmigen Bereich auf die Außenfläche der Welle (1, 20) genügend Druck ausgeübt wird, um das Metall plastisch so zu verformen, daß mindestens ein Teil gestaucht wird und einen ringförmigen Wulst bildet (1, 36, 47), der mindestens zum Teil das Spiel zwischen Wellenund Lochfläche am Lochende ausfullt und somit den Nocken auf der Welle festklemmt, wobei zusätzlich ein Mittel zur Verstärkung der Drehsicherung des Nocken geschaffen wird.

2. Verfahren gemäß Patentanspruch 1, dadurch gekennzeichnet, daß der Druck auf die Außenflächen der Welle (1, 20) so stark ist, daß das Metall der Welle plastisch verformt wird, indem in einem Bereich, der mindestens an ein Ende (11, 48, 49) eines Lochs (2, 13) des Nockens angrenzt, mindestens ein Rändelwerkzeug (5, 6) abgewälzt wird, das einen Formrand (7, 8, 42, 43, 44. 45) mit Profil aufweist, so daß der vom Rändelwerkzeug auf das Wellenmetall ausgeubte Druck zumindest einen Teil des Metalls in Richtung Lochende (11, 48, 49) staucht und somit eine ringförmige Wulst (10, 36, 47) bildet, von der ein Teil das Spiel (e, e1) zwischen den Flächen der Welle und des Lochs wenigstens teilweise ausfüllt.

3. Verfahren gemäß Patentanspruch 2, dadurch gekennzeichnet, daß gleichzeitig zwei Rändelwerkzeuge (5, 6) auf der Welle (1, 20) abgewälzt werden, die sich auf der Wellenachse (X1 - X1, X3 - X3) so gegenüberstehen, daß sich ihre Formränder (7, 8, 42, 43, 44, 45) im ringförmigen Bereich bewegen, der wenigstens an eines der beiden Enden (11, 48, 49) des rochs (2, 13) angrenzt.

4. Verfahren gemäß Patentanspruch 3, dadurch gekennzeichnet, daß an beiden Seiten neben dem Lochende (48, 49) gleichzeitig je ein Formrand (42, 43, 44, 45) der beiden Rändelwerkzeuge gedreht wird.

5. Verfahren gemäß einem der Patentansprüche 1 - 4, dadurch gekennzeichnet, daß die Drehsicherung des Nockens auf der Welle verstärkt wird, indem die Welle eine andere Form als einen kreis hat und das Loch des Nockens entsprechend gestaltet ist.

6. Verfahren gemäß einem der Patentansprüche 1 - 4, dadurch gekennzeichnet, daß die Flächen des Lochs (2, 13) des Nockens (3, 12, 24) und der Welle (1, 20) allgemein eine runde Form haben und daß die Drehsicherung des Nockens (12) auf der Welle verstärkt wird, indem in unmittelbarer Nähe von mindestens einem Lochende (13) mindestens eine Vertiefung (14, 15, 15A, 16) oder ein Relief (17, 18, 18A, 19) gebildet wird, damit bei der plastischen Verformung des Metalls der Welle in Richtung des Lochendes das gestauchte Metall mit der Vertiefung oder dem Relief zusammenwirkt und so eine wirksame Drehsicherung des Nockens gewährleistet.

7. Verfahren gemäß Patentanspruch 6, dadurch gekennzeichnet, daß um die Achse (X2 - X2) des Lochs (13) mehrere Vertiefungen oder Reliefs verteilt sind.

8. Verfahren gemäß Patentanspruch 6 oder 7, dadurch gekennzeichnet, daß mindestens eine Vertiefung oder ein Relief in Form einer Rille oder eines stegs von einem Ende der Innenfläche des Nockens zum anderen angebracht wird.

9. Verfahren gemäß Patentanspruch 8, dadurch gekennzeichnet, daß mindestens eine der beiden entsprechenden Flächen der Welle (20) und des Lochs im Nocken (24) mehrere, in die entsprechenden Rillen (32, 34) der anderen Fläche eingreifende Stege (26, 28) erhält, so daß die Welle im Loch des Nockens mit einer der möglichen, von diesem abhängigen Drehsicherung befestigt werden kann, wobei durch die anschließende Stauchung des Metalls der Welle (20) mit Bildung einer Wulst (36, 47) in einem ringförmigen, an mindestens ein Ende (48, 49) des Lochs angrenzenden Bereich ein eventuelles Spiel zwischen den Stegen und den Rillen im ringförmigen Bereich (50, 51) beseitigt wird.

10. Verfahren gemäß Patentanspruch 9, dadurch gekennzeichnet, daß die Stege (26, 28, 30) und Rillen (32, 34) auf den Rotationsflächen parallel zur Mantellinie gebildet werden.

11. Verfahren gemäß Patentanspruch 9 oder 10, dadurch gekennzeichnet, daß auf der Welle (60) abwechselnd Rillen und Stege gebildet werden, indem auf der Welle mit genügend Druck mindestens ein Rändelwerkzeug (67, 68) spiralförmig abgewälzt wird.

12. Verfahren gemäß einem der Patentansprüche 1 - 11, dadurch gekennzeichnet, daß mit der Welle nicht nur mindestens ein Nocken, sondern mindestens auch ein anderes Stack, wie Lager, Ritzel, tahnrad etc. fest verbunden werden.

13. Nockenwelle mit aufgesetzem(n) Nocken, bestehend aus mindestens einem Nocken (3, 12, 24), in dessen Loch eine Welle eingesetzt wird, deren Außenfläche der Fläche des Lochs entspricht mit genügend Anfangsspiel (e, e1), um die Welle leicht in das Loch einführen und den Nocken auf der Welle leicht bis zu der vorgesehenen Stelle verschieben zu können, dadurch gekennzeichnet, daß sie in mindestens einem, an einem Ende (11, 36, 47) des Lochs von mindestens einem Nocken (3, 24) angrenzenden Bereich einen ringförmigen Wulst (10, 36, 47) aufweist, der durch Stauchung des Metalls der Welle (1, 20) durch plastische Verformung erzielt wird, indem auf die Außenfläche in einem ringförmigen, an das entsprechende Ende (11, 48, 49) des Lochs (2, 13) angrenzenden Bereich Druck ausgeübt wird, wobei ein Teil des Wulstes den ringförmigen Raum im Eingangsbereich (11, 48, 49) des Lochs (2), zwischen dessen Fläche und der entsprechenden Wellenfläche (1, 20) wenigstens teilweise ausfüllt, und daß wenigstens ein Teil des Wulstes mit einem ergänzenden Mittel zusammenwirkt, das die Drehsicherung des Nockens verstärkt.

14. Nockenwelle gemäß Patentanspruch 13, dadurch gekennzeichnet, daß, sofern nur eine Wulst (10) an einem (11) der beiden Enden des Lochs (2) eines Nockens (3) gebildet wird, dieser Nocken zusätzlich an einem Anschlagmittel (4) auf der anderen Seite des Lochs anliegt.

15. Nockenwelle gemäß Patentanspruch 13 oder 14, dadurch gekennzeichnet, daß sie neben mindestens einem Nocken mindestens ein anderes aufgesetztes Stück, wie z. B. Lager, Ritzel, Zahnrad etc. umfaßt, das ein Loch aufweist, zwischen dessen Fläche und der Welle ein Spiel auftritt, wobei dieses teilweise an mindestens einem Ende des Lochs mit einem Wulstteil gefullt ist, der durch plastische Verformung des Metalls der Welle entsteht.

16. Nockenwelle gemäß einem der Patentanspruche 13 - 15, dadurch gekennzeichnet, daß die Flächen der Welle (1, 20) und des Lochs des Nockens (3, 24) oder eines anderen Stücks einen allgemeinen Kreis darstellen, und daß das Loch (13) mindestens eines Nockens (12) oder eines anderen Stücks mindestens eine Vertiefung (14, 15, 15A, 16) und/oder ein Relief (17, 18, 18A, 19) umfaßt, die in unmittelbarer Nähe von mindestens einem Ende des Lochs (13) gebildet werden und die mit mindestens einem Teil von mindestens einem Wulst zusammenwirken.

17. Nockenwelle gemäß Patentanspruch 16, dadurch gekennzeichnet, daß mindestens eine der beiden Flächen mindestens mehrere Reliefs in Form von Stegen (26, 28) umfaßt, die in die Vertiefungen in Form von Rillen (32, 34) der anderen Fläche eingreifen.

18. Nockenwelle gemäß Patentanspruch 17, dadurch gekennzeichnet, daß die Welle (60) aus Stegen und Rillen gebildete Keilnuten umfaßt.

19. Nockenwelle gemäß einem der Patentansprüche 13 - 18, dadurch gekennzeichnet, daß sie mindestens einen Nocken oder ein anderes Stack aus gesintertem, oder geschmiedetem und gesintertem Metall umfaßt.

20. Nockenwelle gemäß einem der Patentansprüche 13 - 19, dadurch gekennzeichnet, daß die Welle (20, 69) hohl ist.
